# EUROPEAN PATENT SPECIFICATION

(11) **EP 4 190 425 B1**
(45) Date of publication and mention of the grant of the patent: **12.02.2025**
(21) Application number: 22460063.5
(22) Date of filing: 22.11.2022
(51) Int. Cl.: B01D 29/35, B01D 29/64, B01D 29/68

(54) **CLEANING NOZZLE FOR SLOTTED FILTER SCREEN WITH SELECTIVITY BELOW 90 MICROMETER**
REINIGUNGSDÜSE FÜR EIN GESCHLITZTES FILTERSIEB MIT SELEKTIVITÄT UNTER 90 MIKROMETER
BUSE DE NETTOYAGE POUR UN FILTRE À FENTES AVEC UNE SÉLECTIVITÉ INFÉRIEURE À 90 MICROMÈTRES

(30) Priority: 01.12.2021 PL 43970821
(43) Date of publication of application: 07.06.2023
(73) Proprietor: PFTechnology Spólka z ograniczona odpowiedzialnoscia, 26-680 Warszawa (PL)
(72) Inventor: Sawicz, Radoslaw, 60-416 Poznan (PL); Zielonka, Pawel, 26-670 Pionki (PL); Jamski, Pawel, 26-085 Miedziana Góra (PL); Przydatek, Jerzy, 25-640 Kielce (PL)
(74) Representative: Fietko-Basa, Sylwia

(56) References cited:
- EP-A1- 3 530 336
- WO-A1-2006/008729
- DE-A1- 3 611 075
- KR-A- 20210 058 124
- US-A1- 2020 230 531

## Description

The invention concerns a cleaning nozzle for cleaning a slotted filter screen with selectivity below 90 µm. The invention is applicable in particular to high- and medium-yield screens, including self-cleaning slotted screens with back flow of the medium.

Various types of devices for cleaning filter screens are known in the art whose operation involves flow of a liquid medium owing to a pressure gradient. The devices are connected through rigid connectors with a central stub pipe arranged along the screen rotation axis and fitted with nozzles arranged parallel to the generatrix of the screen with a small slot of 1-3 mm maintained. In addition, the devices may be fitted with brushes or scrapers. Owing to the adequate arrangement of the nozzles and variable rotation speed of the central manifold along with suction nozzles arranged thereon, the whole surface of the screen is cleaned.

For example, a self-cleaning filter with a cylindrical screen is known from patent specification PL198799 in which a rotary cleaning unit is used which contains at least two cleaning nozzles arranged in two planes perpendicular to the filter axis and on opposite sides of the filter cartridge. Operation of the cleaning nozzles involves suctioning of the medium and they are made of a body with a suction slot forming a suction chamber, fitted to the manifold using bushes through rigid connectors. A tube manifold performs alternate anticlockwise and clockwise movements and it is fitted with openings and fixed rotary movement limiters, and the bushes have locks engaged with the limiters. The openings in the manifold are shifted with respect to successive suction nozzles at least by an angle to ensure obstructing the preceding openings.

In addition, a self-cleaning filter with a conical screen is known from patent specification DE102009010255 in which the cleaning device contains a central, rotationally driven flushing tube to which two flushing arms are connected, shifted against each other in the vertical plane and made in the form of tubes on which two flushing slides are fitted, arranged cornerwise and shifted against each other toward the longitudinal axis of the filter housing. The flushing slides facing the internal shield of the filter drum have a shape of an open box. When the central flushing tube is rotated, the slides are guided along the internal jacket of the filter drum. The peripheral edge of the opening of the flushing slides facing the internal housing of the filter drum matches the conical shape of the filter drum and, with the internal housing of the filter drum, it forms a slot required for the flushing slides to rotate freely.

Moreover, a filter cleaning head is known from international patent application PCT/IL2004/001162, international publication no. WO 2006/008729 A1 which has a filter element disposed between the inlet and the outlet of the device. The inlet surface of the filter element is prone to clogging by suspended particles, e.g. waste, carried with the incoming raw fluid. The invention provides a cleaning head for the filtering device, comprising a basis and a nozzle movably mounted thereon. The cleaning head basis is mounted on a driving mechanism so that the nozzle can scan the inlet surface parallel thereto, and can clean the inlet surface by means of a backwash flow passing through the filter element into the nozzle under a cleaning pressure differential created by connecting the nozzle to a low-pressure outlet. The nozzle maintains, during scanning, permanent contact with the inlet surface so that lateral flow directly into the nozzle is essentially prevented despite variations of distance between the cleaning head basis and the inlet surface during the scanning. The nozzle may be mounted to the cleaning head basis by a moveable joint allowing perpendicular movement of the nozzle with respect to the inlet surface in order to maintain the permanent contact. Preferably, the moveable joint comprises a biasing means urging the nozzle to the inlet surface. The moveable joint and the biasing means allow the perpendicular movement of the nozzle within a first range of distance relative to the cleaning head basis; the filter element has deviations of the inlet surface within a second range of distance relative to the cleaning head basis. Preferably, the second range, during the scanning, is substantially within the first range. More preferably, the middle of the second range is substantially in the middle of the first range.

A problem in such implementations is to maintain an adequate and constant size of the slot between the filter surface and the suction element of the cleaning unit. This involves not only a need for very precise axial arrangement of the engaged filter parts, but also for achieving adequate quality of the screen surface engaged with the cleaning unit. When the cleaning unit is rigidly fitted in the radial direction on the collector manifold and the slot between the screen being cleaned and the nozzle of the cleaning unit is small, even small roughness of the screen results in reduced cleaning efficiency.

The objective of the invention is to develop a design of the cleaning nozzle for removing impurities settling on the filter surface of a highly selective slotted screen as used in self-cleaning filters with back flow of the medium to eliminate the disadvantages discussed above and ensure suction of impurities collected on the screen at a uniform distance from the screen surface. Namely, the effectiveness of impurity removal by the cleaning unit depends on its distance from the surface being cleaned which is limited by shape deviations and tolerance of the cylindrical screen being fitted non-coaxially with respect to the main rotation axis of the cleaning device.

The cleaning nozzle for a slotted filtration screen with selectivity below 90 µm, containing a body which forms a suction chamber and a connection adapted for connecting to a filter tube manifold and a brush to aid in screen cleaning of the invention is characterized in that the body of the cleaning nozzle forming the suction chamber with a suction slot is flexibly connected to the connection in the form of a tube connector ending with a fitting flange, wherein the flexible connection with the tube connector is in the form of a spring fitted on the tube connector between the fitting flange and a bush fitted on the same tube connector and by a guide assembly connected on one side with the cleaning nozzle body and on the other side fitted on the fitting flange parallel to the axis of the tube connector, and spacer rollers are permanently fixed in the cleaning nozzle body from the suction nozzle side, partially extending from the body toward the internal surface of the filter screen.

The cleaning nozzle body preferably has a necking from one side toward the connection and from the other side it has a necking toward the slotted screen while maintaining the suction slot.

A width of the suction slot in the cleaning nozzle body corresponds the width of 2 to 3 slots in the filter screen, not shown in the figure, mating with the cleaning nozzle.

The cleaning nozzle body is preferably connected separably to a barrier to aid in screen cleaning, parallel to the suction slot.

The barrier to aid in screen cleaning preferably consists of a brush arranged between linings, and the elements are connected with one another and fitted to the cleaning nozzle body through screw connectors.

The barrier to aid in screen cleaning preferably has a length equal to the suction slot.

The spacer rollers preferably extend outside the cleaning nozzle body by a distance of "n" equal to the slot between the suction slot and the internal surface of the filter screen.

The bush fitted on the tube connector preferably contains internal sealing.

The guide assembly preferably consists of a bush and a rod in which adjustment holes for a pin are fitted.

The implementation of the invention eliminates the problem of maintaining a uniform distance between the suction slot of the cleaning nozzle and the internal surface of the filter screen. By using elastic pressure on the cleaning nozzle toward the internal surface of the filter screen and the system of spacer rollers rolling on the surface, the cleaning nozzle moves at a constant distance from the surface being cleaned, which significantly improves the effectiveness and yield of cleaning.

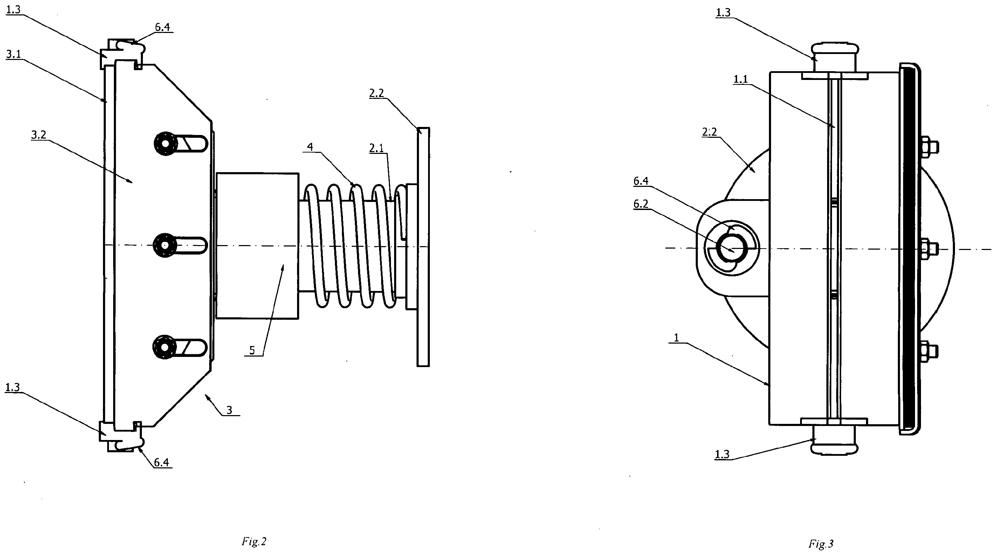

The invention is shown in an embodiment in the figure, wherein Fig.1 shows the cleaning nozzle in the axonometric expanded view, Fig.2 shows a view of the cleaning nozzle from the side of the fitted barrier to aid in screen cleaning, Fig. 3 shows a view of the cleaning nozzle from the front, and Fig.4 and Fig.5 show the nozzle in longitudinal sections to illustrate connection of the cleaning nozzle to the elastic assembly.

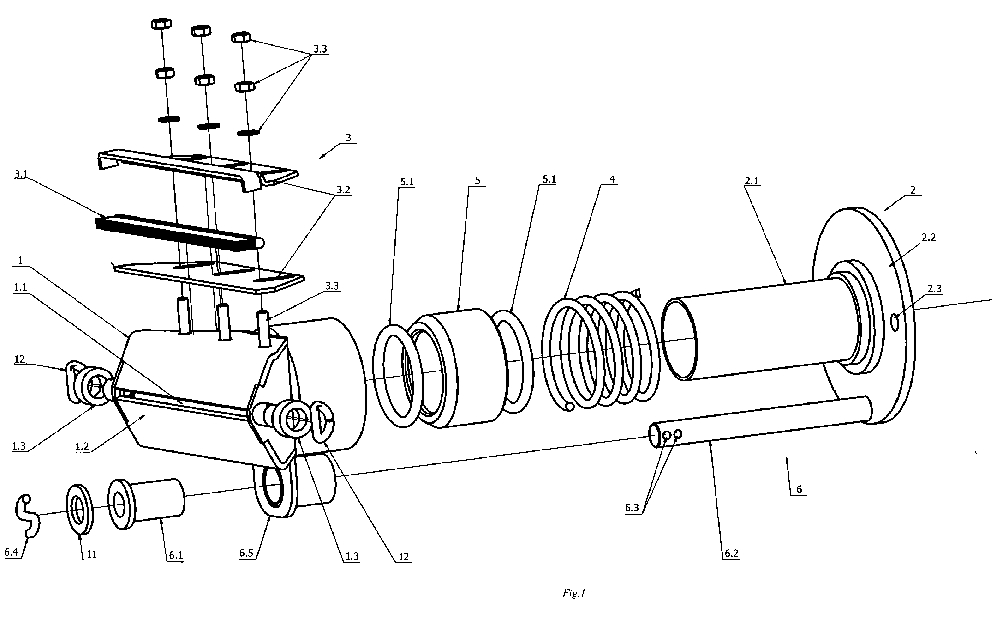

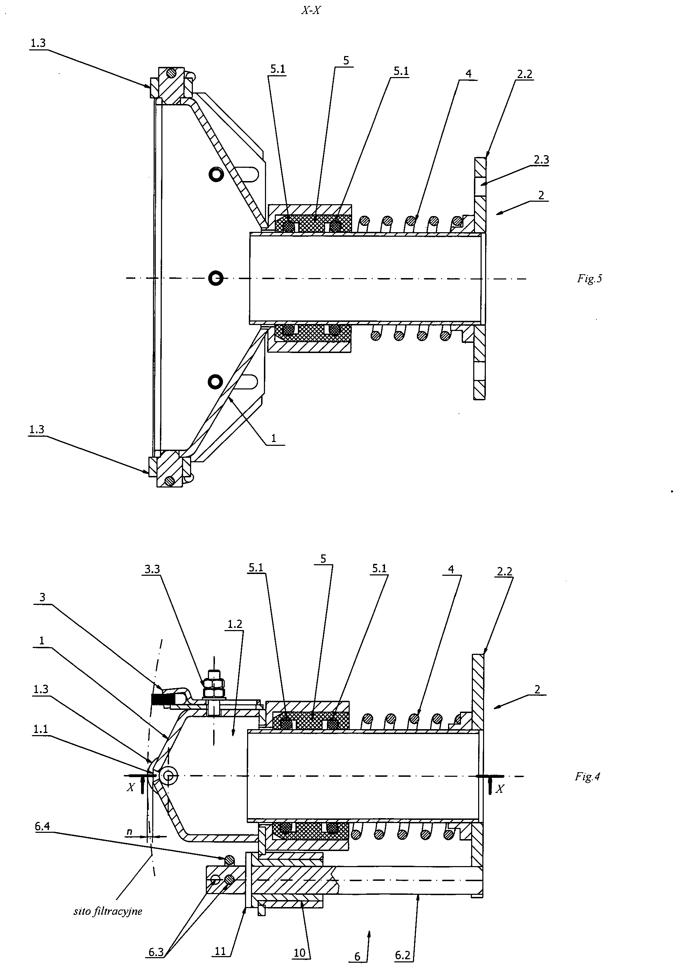

The cleaning nozzle for a slotted filter screen with selectivity below 90 µm in an embodiment consists of body 1 with suction slot 1.1 which forms suction chamber 1.2 and it is fitted flexibly to connection 2 in the form of tube connector 2.1 ending with a fitting flange 2.2 with openings 2.3 for connecting screws, not shown in the figure (Fig.1). The body 1 of the cleaning nozzle has a necking from one side toward the connection 2 (Fig.5) and from the other side it has a necking toward the slotted screen indicated by a dashed line in the figure, forming the suction slot 1.1 (Fig.4). In the body 1 of the cleaning nozzle from the side of the suction slot 1.1, spacer rollers 1.3 are permanently fitted, arranged axially on both ends of the suction slot 1.1. The spacer rollers 1.3 partially extend outside the body 1 of the cleaning nozzle toward the internal surface of the filter screen by a distance of "n" equal to the slot between the suction slot 1.1 of the cleaning nozzle and the internal surface of the filter screen indicated by a dashed line in the figure (Fig.4). The width of the suction slot in the body 1 of the cleaning nozzle is equal to the width of 2 to 3 slots in the filter screen, indicated by a dashed line in the figure. The body 1 of the cleaning nozzle is connected with barrier 3 to aid in filter screen cleaning, parallel to the suction slot 1.1. The barrier 3 to aid in screen cleaning consists of brush 3.1 arranged between linings 3.2, and the aforementioned elements are connected with one another and fitted to the body 1 of the cleaning nozzle through screw connectors 3.3. The elastic connection of the body 1 of the cleaning nozzle with the connection 2 is implemented through spring 4 and bush 5 fitted on the tube connector 2.1 of the connection 2 and through guide assembly 6 which is connected on one side with the body 1 of the cleaning nozzle and on the other side it is fitted on the fitting flange 2.2 of the connection 2, parallel to the axis of the tube connector 2.1. The bush 5 fitted on the tube connector 2.1 contains internal sealing 5.1 and it is made of plastic. The guide assembly 6 consists of bush 6.1 fitted on rod 6.2 in which adjustment holes 6.3 for pin 6.4 are fitted.
The cleaning nozzle engages with the filter manifold, not shown in the figure, thus enforcing its movement on the internal surface of the filter screen being cleaned. The internal surface of the filter screen is the leading surface for the spacer rollers 1.3 which roll on the surface during a cleaning cycle. The body 1 of the cleaning nozzle with the slot 1.1 maintains a constant distance from the filter surface being cleaned. The spacer rollers 1.3 are pressed to the screen with the body 1 by the spring 4 aligned on the rube connector 2 as an integral part with the fitting flange 2.1. The internal sealing 5.1 of the bush 5 separates the space of the "dirty" filter chamber from the suction chamber 1.2 of the body 1 of the cleaning nozzle. The body 1 of the cleaning nozzle can freely and axially move along the rod 6.2 owing to holder 6.5 of the guide assembly 6 fitted to the body 1, wherein on the loose end of the rod 6.2 adjustment holes 6.3 for the pin 6.4 are fitted, used to adjust the range of movement and they limit the minimum and maximum distance of the suction slot 1.1 from the internal surface of the filter screen.

## Claims

1. A cleaning nozzle for a slotted filtration screen with selectivity below 90 µm, containing a body which forms a suction chamber and a connection adapted for connecting to a filter tube manifold and a brush to aid in screen cleaning, **characterized in that** the body (1) of the cleaning nozzle forming the suction chamber (1.2) with a suction slot (1.1) is flexibly connected to the connection (2) in the form of a tube connector (2.1) ending with a fitting flange (2.2), wherein the flexible connection with the tube connector (2.1) is in the form of a spring (4) fitted on the tube connector (2.1) between the fitting flange (2.2) and a bush (5) fitted on the same tube connector (2.1) and by a guide assembly (6) connected on one side with the cleaning nozzle body (1) and on the other side fitted on the fitting flange (2.2) parallel to the axis of the tube connector (2.1), and spacer rollers (1.3) are permanently fixed in the cleaning nozzle body (1) from the side of the suction nozzle (1.1), partially extending from the body (1) toward the internal surface of the filter screen.

2. The cleaning nozzle of claim 1, **characterized in that** the body (1) of the cleaning nozzle has a necking from one side toward the connection (2) and from the other side it has a necking toward the slotted screen while maintaining the suction slot (1.1).

3. The cleaning nozzle of claim 1 or 2, **characterized in that** a width of the suction slot (1.1) in the body of the cleaning nozzle corresponds the width of 2 to 3 slots in the filter screen mating with the cleaning nozzle.

4. The cleaning nozzle of claim 1, **characterized in that** the brush (3.1) to aid in screen cleaning is arranged between linings (3.2) forming a barrier (3) separably connected with the body (1) of the cleaning nozzle, wherein the barrier (3) is fitted parallel to the suction slot (1.1).

5. The cleaning nozzle of claim 4, **characterized in that** the barrier (3) is fitted to the body (1) of the cleaning nozzle using screw connectors (3.3).

6. The cleaning nozzle of claim 4, **characterized in that** the barrier (3) to aid in screen cleaning has a length equal to the suction slot (1.1).

7. The cleaning nozzle of claim 1, **characterized in that** the spacer rollers (1.3) partially extend outside the cleaning nozzle body by a distance of "n" equal to the slot between the suction slot (1.1) and the internal surface of the filter screen.

8. The cleaning nozzle of claim 1, **characterized in that** the bush (5) fitted on the tube connector (2.1) contains internal sealing (5.1).

9. The cleaning nozzle of claim 1, **characterized in that** the guide assembly (6) consists of a bush (6.1) fitted on a rod (6.2) in which adjustment holes (6.3) for a pin (6.4) are fitted.

## Patentansprüche

1. Reinigungsdüse für ein Spaltfiltrationssieb mit einer Selektivität unter 90 µm, die einen Körper, der eine Saugkammer bildet, und einen Anschluss enthält, der zum Anschließen an einen Filterrohrverteiler und eine Bürste zur Unterstützung der Siebreinigung geeignet ist, **dadurch gekennzeichnet, dass** der Körper (1) der Reinigungsdüse, der die Saugkammer (1.2) mit einem Saugschlitz (1.1) bildet, flexibel mit dem Anschluss (2) in Form eines Rohrverbinders (2.1) verbunden ist, der mit einem Anschlussflansch (2.2) endet, wobei die flexible Verbindung mit dem Rohrverbinder (2.1) in Form einer Feder (4), die an dem Rohrverbinder (2.1) zwischen dem Anschlussflansch (2.2) und einer Buchse (5) angebracht ist, und durch eine Führungseinheit (6), die auf einer Seite mit dem Reinigungsdüsenkörper (1) verbunden und auf der anderen Seite auf dem Anschlussflansch (2.2) parallel zur Achse des Rohrverbinders (2.1) angebracht ist, und Abstandsrollen (1.3) sind im Körper der Reinigungsdüse (1) von der Seite der Saugschlitzes (1.1) her dauerhaft befestigt und erstrecken sich teilweise vom Körper (1) in Richtung der Innenfläche des Filtersiebs.

2. Reinigungsdüse nach Anspruch 1, **dadurch gekennzeichnet, dass** der Körper (1) der Reinigungsdüse auf der einen Seite eine Einschnürung in Richtung des Anschlusses (2) und auf der anderen Seite eine Einschnürung in Richtung des Spaltsiebs aufweist, wobei der Saugschlitz (1. 1) erhalten bleibt.

3. Reinigungsdüse nach Anspruch 1 oder 2, **dadurch gekennzeichnet, dass** die Breite des Saugschlitzes (1.1) im Körper der Reinigungsdüse der Breite von 2 bis 3 Schlitzen in dem mit der Reinigungsdüse zusammenpassenden Filtersieb entspricht.

4. Reinigungsdüse nach Anspruch 1, **dadurch gekennzeichnet, dass** die Bürste (3.1) zur Unterstützung der Siebreinigung zwischen Auskleidungen (3.2) angeordnet ist, die eine Barriere (3) bilden, die lösbar mit dem Körper (1) der Reinigungsdüse verbunden ist, wobei die Barriere (3) parallel zu dem Saugschlitz (1.1) angebracht ist.

5. Reinigungsdüse nach Anspruch 4, **dadurch gekennzeichnet, dass** die Barriere (3) mit Hilfe von Schraubverbindungen (3.3) am Körper (1) der Reinigungsdüse angebracht ist.

6. Reinigungsdüse nach Anspruch 4, **dadurch gekennzeichnet, dass** die Barriere (3) zur Unterstützung der Siebreinigung eine Länge aufweist, die dem Saugschlitz (1.1) entspricht.

7. Reinigungsdüse nach Anspruch 1, **dadurch gekennzeichnet, dass** sich die Abstandsrollen (1.3) teilweise außerhalb des Reinigungsdüsenkörpers um einen Abstand "n" erstrecken, der gleich dem Schlitz zwischen dem Saugschlitz (1.1) und der Innenfläche des Filtersiebs ist.

8. Reinigungsdüse nach Anspruch 1, **dadurch gekennzeichnet, dass** die auf den Rohrverbindern (2.1) aufgesetzte Buchse (5) eine innere Dichtung (5.1) aufweist.

9. Reinigungsdüse nach Anspruch 1, **dadurch gekennzeichnet, dass** die Führungseinheit (6) aus einer Buchse (6.1) besteht, die auf einer Stange (6.2) angebracht ist, in der Einstelllöcher (6.3) für einen Stift (6.4) angebracht sind.

## Revendications

1. Buse de nettoyage pour tamis filtrant à fentes avec une sélectivité inférieure à 90 pm, contenant un corps qui forme une chambre d'aspiration et un raccord adapté pour se connecter à un collecteur de tubes filtrants et à une brosse pour aider au nettoyage du tamis, **caractérisée en ce que** le corps (1) de la buse de nettoyage formant la chambre d'aspiration (1.2) avec une fente d'aspiration (1.1) est relié de manière flexible au raccord (2) sous la forme d'un raccord de tube (2.1) se terminant par une bride de montage (2.2), la liaison flexible avec le raccord de tube (2.1) étant sous la forme d'un ressort (4) monté sur le raccord de tube (2.1) entre la bride de montage (2.2) et une douille (5) montée sur le même raccord de tube (2.1) et par un ensemble de guidage (6) relié d'un côté au corps de buse de nettoyage (1) et de l'autre côté monté sur la bride de montage (2.2) parallèlement à l'axe du raccord de tube (2.1), et des rouleaux d'espacement (1.3) sont fixés de manière permanente dans le corps de buse de nettoyage (1) du côté du buse d'aspiration (1.1), s'étendant partiellement du corps (1) vers la surface interne du tamis filtrant.

2. Buse de nettoyage selon la revendication 1, **caractérisée en ce que** le corps (1) de la buse de nettoyage présente un rétrécissement d'un côté vers le raccord (2) et de l'autre côté il présente un rétrécissement vers le tamis à fentes tout en maintenant la fente d'aspiration (1.1).

3. Buse de nettoyage selon la revendication 1 ou 2, **caractérisée en ce qu'**une largeur de la fente d'aspiration (1.1) dans le corps de la buse de nettoyage correspond à la largeur de 2 à 3 fentes dans le tamis filtrant correspondant à la buse de nettoyage.

4. Buse de nettoyage selon la revendication 1, **caractérisée en ce que** la brosse (3.1) pour aider au nettoyage de l'écran est disposée entre des garnitures (3.2) formant une barrière (3) reliée de manière séparable au corps (1) de la buse de nettoyage, la barrière (3) étant montée parallèlement à la fente d'aspiration (1.1).

5. Buse de nettoyage selon la revendication 4, **caractérisée en ce que** la barrière (3) est montée sur le corps (1) de la buse de nettoyage à l'aide de raccords à vis (3.3).

6. Buse de nettoyage selon la revendication 4, **caractérisée en ce que** la barrière (3) destinée à faciliter le nettoyage de l'écran a une longueur égale à la fente d'aspiration (1.1).

7. Buse de nettoyage selon la revendication 1, **caractérisée en ce que** les rouleaux d'espacement (1.3) s'étendent partiellement à l'extérieur du corps de buse de nettoyage sur une distance « n » égale à la fente entre la fente d'aspiration (1.1) et la surface interne du tamis filtrant.

8. Buse de nettoyage selon la revendication 1, **caractérisée en ce que** la douille (5) montée sur le raccord de tube (2.1) contient un joint interne (5.1).

9. Buse de nettoyage selon la revendication 1, **caractérisée en ce que** l'ensemble de guidage (6) est constitué d'une douille (6.1) montée sur une tige (6.2) dans laquelle sont aménagés des trous de réglage (6.3) pour une goupille (6.4).
